(19) Europäisches Patentamt
European Patent Office
Office européen des brevets

(11) **EP 1 916 334 A1**

(12) **EUROPEAN PATENT APPLICATION**
published in accordance with Art. 153(4) EPC

(43) Date of publication:
**30.04.2008 Bulletin 2008/18**

(21) Application number: **05769730.2**

(22) Date of filing: **04.08.2005**

(51) Int Cl.:
*D21H 13/14* (2006.01)   *D21H 17/63* (2006.01)
*D21H 17/66* (2006.01)   *D21H 17/68* (2006.01)
*D21H 21/54* (2006.01)   *C08L 23/06* (2006.01)
*C08J 5/18* (2006.01)    *C08K 3/26* (2006.01)
*C08K 3/34* (2006.01)    *C08K 7/16* (2006.01)
*C08K 7/18* (2006.01)

(86) International application number:
**PCT/IB2005/002482**

(87) International publication number:
**WO 2007/015120 (08.02.2007 Gazette 2007/06)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **Pira Alfonso, Alejandro**
**Bogota, 001 (CO)**

(72) Inventor: **Pira Alfonso, Alejandro**
**Bogota, 001 (CO)**

(74) Representative: **Heiland, Karsten et al**
**Meissner, Bolte & Partner GbR**
**Hollerallee 73**
**28209 Bremen (DE)**

(54) **SYNTHETIC PAPER**

(57)     The present invention refers to the manufacture of synthetic paper, produced from a blend of several polymers at certain proportions, in order to obtain certain properties that offer improved features compared to other similar papers.

EP 1 916 334 A1

## Description

### BACKGROUND

A generalized need exists in the paper industry to provide a product produced from polymers that would replace paper manufactured from cellulose. The solution offered by prior art in this sense is primarily related to solutions stemming from extruded or co-extruded polyolefins[1], to which different additives are added in order to improve certain parameters. All inventions known to date have concentrated their efforts in developing a film similar to paper, but they have not been concerned in obtaining a behavior like that of paper in the majority of its features.

[1] Polyethylene or polypropylene

In the graphic design industry, the art offers numerous alternatives for obtaining higher quality paper that cellulose paper cannot provide.

However, in the packing industry the need for synthetic paper that can substitute paper in an effective and economical (cost-efficient) manner still exists. Consequently, synthetic paper still poses certain problems which impede its generalized use. Particularly, synthetic paper that can achieve the same appearance, flexibility, touch, and creasing capacity[2] that conventional paper offers is required, and all the above in an economically competitive product. To date, synthetic papers produced from polyolefins continue to present problems trying to meet these requirements, the primary problem still being the "memory[3]" these papers show. Polyolefins have a tendency of returning to its original stage when folded, which means that synthetic paper wrapped around a product will eventually unwrap, exposing the product to its surroundings and therefore failing in its objective.

[2] Property cellulose paper displays of remaining folded after being subject to creasing by a predetermined pressure. Also known as "deadfold" in the art.

[3] Property films produced with polymers have of returning to its original stage after being subject to a crease by a predetermined pressure.

Several tries exist in the art in order to solve this problem. In principle, all solutions are directed towards providing a filling or other element that allows the reduction or elimination of memory from the polyolefin.

WO 94/06849 A1 (Bergevin et. al.) discloses a film similar to paper, compositions and production method thereof. This prior art document suggests the use of polyethylene having several densities, and in several proportions, combined amongst each other, or blended with other components. In a preferred embodiment, the film's composition suggests the use of high density polyethylene, or a blend of polyethylenes wherein at least one polyethylene is of high density. In this preferred embodiment, the filling consists of calcium carbonate present in a range between 25% and 43% of the entire blend and magnesium silicate particles (talc) having a spherical diameter equivalent to 2.2 $\mu$m.

WO 02/102593 A1 (Le Roux et al.) discloses a polymeric film, that may be polyethylene, which contains a filling having a fine granulometry[4], allowing for a friction coefficient and creasing capacity similar to that of paper. In the preferred embodiment, the filling consists of calcium carbonate present in a range between 10% and 50% per weight of the polymer. The document also points out that the filling granulometry selection is crucial whereby it greatly affects the paper's sense of touch. However, it does not indicate any particular preferred particle size or shape. The document also establishes that the preferred polymer is high density polyethylene.

[4] refers to the measurement of particle size

### Brief Description of the Invention

The present invention provides synthetic paper which solves the above problems, particularly synthetic paper having good creasing (little memory), having the appearance and sense of touch similar to that of cellulose paper, and being economically competitive.

The present invention developed a formulation which produced synthetic paper which looks and behaves like cellulose paper having an additional quality, thus allowing it to be resistant to oil and humidity in general.

The invention achieves the above using high density polyethylene together with magnesium silicate (talc) having a particular granulometry in order to lessen the paper's memory, and additionally uses calcium carbonate in order to provide cellulose paper appearance and sense of touch.

In a preferred embodiment of the invention, for production of synthetic paper, high density and low molecular weight polyethylene is used, together with magnesium silicate particles having a mean equivalent spherical diameter of 15 $\mu$m, and calcium carbonate particles having a mean equivalent spherical diameter of 1 $\mu$m.

### Detailed Description of the Invention

In advance, it is useful to first define some terms which will be used throughout the present application.

For the present application:

- (HDPE) High density polyethylene comprises PE ranging between 0.930 $g/cm^3$ and under 0.970 $g/cm^3$.
- (LDPE) Low density polyethylene comprises PE ranging between 0.914 $g/cm^3$ and under 0.930 $g/cm^3$.
- Low molecular weight polyethylene comprises PE wherein the majority of its short chains are slightly branched (irregular or lineal) and having a high melting index.
- High molecular weight polyethylene comprises PE the majority of its long chains are highly branched (irregular or lineal) and having a low melting index.
- Melting index: amount of polymer flowing through an orifice, at a set rate, set temperature, and set weight. The greater the polymer flow, greater the melting index value and vice versa.
- E.S.D. corresponds to the English abbreviation for Equivalent Spherical Diameter. It is calculated as follows:

$$\text{E.S.D.: Equivalent Spherical Diameter} = \left( \frac{6 \cdot \text{Particle volume}}{\Pi} \right)^{1/3}$$

- A sample maximum cut indicates that 98% of the particles have an E.S.D. less than the maximum cut. For example, if a sample has a maximum cut of 15 $\mu$m, 98% of the sample's particles have an E.S.D. less than 15 $\mu$m.
- Mean particle measure is the E.S.D. of the greater number of particles having a uniform size found in a sample.

The components of the blend of the present invention consist of synthetic paper produced from one or more high density polyethylenes (PE), mixed together with magnesium silicate (talc) ($Mg_3H_2(SiO_3)_4$), calcium carbonate ($CaCO_3$) and finally titanium dioxide.

The polyethylene content must be high density, and preferably low molecular weight, having a melting index (re ASTM D-1238) ranging between 1 and 5 g /10 minutes, preferably 2 g /10 minutes. The PE is preferably found in a range between 50% and 90% p/p, depending on the intended paper basic weight (grammage). The use of low molecular weight polyethylene allows for better component homogenization and much smoother extrusion, which allows working at slightly lower temperatures, hence avoiding possible oxidations caused by excesses in temperature.

Magnesium silicate (talc) has a cut value greater than 44 $\mu$m, in a proportion ranging between 10% and 32% of the total amount of the mix. The tests carried out during the present invention allowed to observe that the laminar form and particle size used herein are ideal for granting the silk paper texture since the sheet edges protrude from the surface therefore giving a rough effect. Said sheets make the film brittle having good creasing (deadfold), thereby eliminating a great portion of memory. If a greater cut particle is used, the film turns too rough and cannot be thinned. On the contrary, if a lesser cut particle is used, no effect is observed.

Calcium carbonate requires greater cut values ranging between 50 and 60 $\mu$m, in a proportion ranging between 1% and 20% of the total amount of the mix. The tests carried out during the present invention allowed to observe that when using only talc, the paper turns out too rough, making it necessary to smooth said effect without losing the previously obtained properties. This is when calcium carbonate is added to act as a talc dispersant, making its way between the sheets. The particle size must not be greater since it would greatly block the effects gained by the talc.

Titanium dioxide may be used in a proportion of 2% of the total value of the mix, in order to provide adequate whiteness.

One of the most important features of this invention consists in that in order to maintain excellent creasing, it was discovered that under no circumstance was low density polyethylene to be used in any of its forms (blend, lamination, co-extrusion), since its branched molecular structure, either amorphous or lineal, immediately destroyed the crease. Synthetic paper is totally incompatible with such class of polyethylenes.

The manufacture of this synthetic paper is produced by means of an extrusion process, either by a blow film system, or by a cast film system, depending on the final product to be obtained. If the papers are thin, between 20 and 50 $g/m^2$, they may be manufactured in blow film. Greater than 50 $g/m^2$ must be manufactured in cast film because if the other system is used, thickness and wrinkle formation control is lost. Synthetic paper is produced ranging from 20 $g/m^2$ up to 120 $g/m^2$ and may be dyed in any color, without affecting its final properties. Also it allows sticking using glues or heat. If the paper is used as packing means in automated packing machines, these machines do not need large modifications. In certain occasions, small adjustments are made on the cutting system, depending on the equipment.

This paper is printed using flexography or rotogravure processes, using alcohol diluted inks. For better ink adhesion on paper, corona treatment must be done.

**Manufacture process**

Firstly, a master batch must be prepared in order to handle calcium carbonate, magnesium silicate and titanium dioxide, substances present in powder form, whereas high density polyethylene is in pellets. Therefore, we take very low molecular weight high density polyethylene, between 10 and 50 g/10 minutes, and we ground it; this is done in order to mix it well with the other components that are present as powders. Later, it is mixed in a tumbling mixer for no less than an hour.

Finally, it is extruded in a double screw extruder (specialized machine for preparing master batch since it has an excellent homogenization capacity and very necessary in this case) and is converted into pellets. The temperature profile can be the following: first zone 120°C, second zone 160°C, third zone 200°C, and head 200°C. Temperatures should not exceed 200°C in order to avoid oxidation of the high density polyethylene.

Typically, conventional techniques for preparing a master batch that will be mixed with polyethylenes, but low density, use very low molecular weight polyethylene, either irregularly branched or linearly branched. One of the key aspects of this invention was discovering precisely that this technique prevents reducing memory of the resulting films.

In order to get the mix for extrusion, the master batch (very low molecular weight high density polyethylene, talc, calcium carbonate and titanium dioxide) and low molecular weight high density polyethylene are combined in a tumbling mixer for 45 to 75 minutes, depending on the amount to be mixed, and trying to get good distribution of all components.

Furthermore, the extrusion process begins. The extruder must have excellent refrigeration in its feeding zone in order to avoid initial overheating of the mixture and hence maintain uniform feeding. The extruder screw must at least have a 24 diameter length, with a homogenization zone in order to have optimal uniformity of all mix components.

The temperature profile during the extrusion process through the cylinder shall be: 150°C in the first zone, 180°C in the second zone, 190°C in the third zone, 210°C in the screen carrier and 210° in the cast. These temperatures may vary according to the type of machine used and the melting index used.

The paper tends to wrinkle a lot, since it tries to rapidly solidify upon exiting the extruder cast. In order to correct this, it is necessary that the paper arrives at the pull rolls as hot as possible (100°C). This can be achieved bringing the pull rolls towards the cast exit, and controlling the cooling air.

On one of the lead rolls which guide the paper towards the winding coil, a corona treatment is preferably applied, raising the paper's surface tension to at least 40 dynes, in order to ease printing.

If the paper use requires breathing, the paper is microperforated after printing and before entering the cutting phase. This process may be carried out hot or cold, but due to the paper's rigidity, it is preferable cold in order to maintain a smooth surface.

**Preferred Embodiments**

Formulation I

Formulation for producing paper used in wrapping 50 g/m$^2$ margarine using an automatic packing process:

- 65% p/p high density polyethylene, 0.960 g/cm$^3$ density, melting index 1.5 g/10 minutes;

- 15% p/p high density polyethylene, 0.950 g/cm$^3$ density, melting index 20 g/10 minutes;

- 13% p/p magnesium silicate (talc);

- 5% p/p calcium carbonate; and

- 2% p/p titanium dioxide.

The above general procedure to produce the paper was followed.

Formulation II

Formulation for producing paper for wrapping 30 g/m$^2$ hamburgers and fast food in general:

- 74% p/p high density polyethylene, 0.964 g/cm$^3$ density, melting index 2 g/10 minutes;

- 10% p/p high density polyethylene, 0.950 g/cm$^3$ density, melting index 20 g/10 minutes;

- 10% p/p magnesium silicate (talc);

- 4% p/p calcium carbonate; and

- 2% p/p titanium dioxide.

The above general procedure to produce the paper was followed.

Method for measuring memory

The following method was developed for measuring paper memory:

1. An apparatus having two coils or rolls was manufactured, one made of rubber having a hardness of 60 shore and one made of metal, one on top of the other, on the ends thereof air pistons were placed putting pressure. These rolls are coupled to a gear mechanism which is driven by a motor carrying a frequency shifter for precisely controlling revolutions.

2. For comparison purposes, 5 synthetic paper samples were taken of Formulation I, 5 samples of aluminium sheet and 5 samples of polypropylene sheet, all having 75 $\mu$m thickness respectively, size 10 cm by 10 cm. Aluminium sheet is used since this type of wrapping is widely used in areas where excellent creasing is needed and polypropylene sheet is used since this product is used in certain types of packaging like for example french-fries.

3. The rolls started spinning at a speed of 60 turns per minute and subject to pressures of 10 psi, 20 psi, 30 psi, 40 psi, and 50 psi respectively.

4. Each sample was slightly folded in half and introduced through the rolls.

5. The first test was carried out at 10 psi introducing a synthetic paper sample, later an aluminium sample and finally a polypropylene sample. Likewise, the second test was carried out at 20 psi, the third at 30 psi, the fourth at 40 psi and the fifth at 50 psi.

6. After subjecting to pressure stress, the samples were left standing for 10 minutes in order to give them an opportunity to recover memory and the opening angle formed by the two planes was measured.

The result of the angle formed by the two planes was very small for synthetic paper, a 0° angle for aluminium, and a 180° angle for polypropylene; therefore, and trying to simulate an industrial margarine wrapping machine crease, the following was done:

1. The same samples, already folded in half, were slightly folded again in such a way that four superimposed planes measuring 5 cm by 5 cm were created and again were introduced inside the rolls, at the same speed and same pressures.

2. The samples were left standing for ten minutes and the results are shown on the following table.

Formulation I

|  | 10 psi | 20 psi | 30 psi | 40 psi | 50 psi |
|---|---|---|---|---|---|
| Synthetic paper angle | 12°/60° | 10° / 55° | 8° / 45° | 6° / 43° | 4° / 40° |
| aluminium paper angle | 0° / 0° | 0° / 0° | 0° / 0° | 0° / 0° | 0° / 0° |
| Polypropylene angle | 180° / 180° | 180° / 180° | 180°/180° | 180°/180° | 180° / 180° |

The values obtained are expressed in:

(Angle obtained when folding in two / Angle obtained when folding in four)

In order to convert these results into percentages, we can say that a zero memory sheet is one that upon folding at a predetermined pressure, the angle formed between the two planes is zero, as in the aluminium case. Hence, we can say that a sheet having much more memory is one that upon folding at a predetermined pressure, the angle formed between the two planes is 180°, like for example a polypropylene sheet.

We can conclude that a paper having maximum memory would have a 100% value and one with zero memory 0%.

The above table would read as follows:

Memory percentage

|  | 10 psi | 20 psi | 30 psi | 40 psi | 50 psi |
|---|---|---|---|---|---|
| Synthetic paper angle | 6.6 / 33.3 | 5.5 / 30.5 | 4.4 / 25 | 3.3 / 23.8 | 2.2 / 22 |
| aluminium paper angle | 0° / 0° | 0° / 0° | 0° / 0° | 0° / 0° | 0° / 0° |
| Polypropylene angle | 100/ 100 | 100/ 100 | 100/ 100 | 100/ 100 | 100/ 100 |

**Claims**

1. Synthetic paper including the following components:

    - one or more high density polyethylenes;
    - magnesium silicate having an equivalent spherical diameter between 3 $\mu$m and 50 $\mu$m; and
    - calcium carbonate.

2. The synthetic paper of claim 1, **characterized** because the p/p percentage ranges of each component is:

    - high density polyethylene, 50% to 75%;
    - magnesium silicate, 5% to 32%; and
    - calcium carbonate, 4% to 16%.

3. The synthetic paper of claim 1, wherein one or more of the high density polyethylenes is of very low molecular weight.

4. The synthetic paper of claim 1, wherein the density of the high density polyethylene ranges between 0.930 and 0.970 g/cm$^3$.

5. The synthetic paper of claim 1, wherein the magnesium silicate particles have a mean equivalent spherical diameter between 10 $\mu$m and 20 $\mu$m.

6. The synthetic paper of claim 4, wherein at least 98% of the magnesium silicate particles have an equivalent spherical diameter less than 44 $\mu$m.

7. The synthetic paper of claim 4, wherein the magnesium silicate is substantially present in laminar shaped particles.

8. The synthetic paper of claim 1, wherein the calcium carbonate particles have a mean equivalent spherical diameter between 1 and 1.2 $\mu$m.

# INTERNATIONAL SEARCH REPORT

| | International application No. |
|---|---|
| | PCT/IB 2005/002428 |

**A. CLASSIFICATION OF SUBJECT MATTER**

extra sheet

According to International Patent Classification (IPC) or to both national classification and IPC

**B. FIELDS SEARCHED**

Minimum documentation searched (classification system followed by classification symbols)
    D21H 13/00, 13/14, 17/63, 17/66, 17/67, 17/68, 21/54, C08L 23/06, C08J 5/18, C08K 3/26, 3/34, 7/16, 7/18

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 94/06849 A1 (DUPONT CANADA INC.) 31. 03. 1994, abstract, claim 1 | 1-8 |
| Y | WO 02/36698 A2 (A.SCHULMAN, INC.) 10. 05. 2002, derwent abstract | 1-8 |
| Y | US 4082880 A (du PONT of CANADA LIMITED.) 04. 04. 1978, claim | 1-8 |
| Y | JP 7308970 A (TONEN SEKIYUKAGAKU KK) 28. 11. 1995 | 3-4, 8 |
| A | US 5047121 A (E.I. DU PONT de NEMOUROS and COMPANY) 10.09.1991 | 1-8 |

☐ Further documents are listed in the continuation of Box C.          ☐ See patent family annex.

* Special categories of cited documents:
"A" document defining the general state of the art which is nit considered
to be of particular relevance
"E" earlier application or document but published on or after the international filing date
"L" document which may throw doubts on priority claim(s) or which is
cited to establish the publication date of another citation or other special reason (as specified)
"O" document referring to an oral disclosure, use, exhibition or other means
"P" document published prior to the international filing date but later than
the priority date claimed

"T" later document published after the international filing date or priority
date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be
considered to involve an inventive step when the document is
combined with one or more other such documents, such combination being obvious to a person skilled in the art
"&" document member of the same patent family

| Date of the actual completion of the international search 16 January 2006 (16. 01. 2006) | Date of mailing of the international search report 22 February 2006 (22. 02. 2006) |
|---|---|
| Name and mailing address of the ISA/RU    FIPS Russia, 123995, Moscow, G-59, GSP-5, Berezhkovskaya nab., 30-1 Facsimile No. | Authorized officer          V. Shimanskaya Telephone No. |

Form PCT/ISA/210 (second sheet) (April 2005)

| INTERNATIONAL SEARCH REPORT | International application No. |
|---|---|
| | PCT/IB 2005/002482 |

CLASSIFICATION OF SUBJECT MATTER

*D21H 13/14* (2006.01)
*D21H 17/63* (2006.01)
*D21H 17/66* (2006.01)
*D21H 17/68* (2006.01)
*D21H 21/54* (2006.01)
*CO8L 23/06* (2006.01)
*CO8J 5/18* (2006.01)
*CO8K 3/26* (2006.01)
*CO8K 3/34* (2006.01)
*CO8K 7/16* (2006.01)
*CO8K 7/18* (2006.01)

Form PCT/ISA/210 (extra sheet) (April 2005)

8

**EP 1 916 334 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9406849 A1, Bergevin
- WO 02102593 A1, Le Roux